# EUROPEAN PATENT SPECIFICATION

(11) **EP 0 747 265 B1**
(45) Date of publication and mention of the grant of the patent: **10.03.1999**
(21) Application number: 96304141.3
(22) Date of filing: 05.06.1996
(51) Int. Cl.: B60R 13/02, B60J 10/00, B60J 10/04

(54) **Retaining, sealing or finishing strips**
Befestigungs-, Dichtungs- oder Zierstreifen
Bandes de retenue, d'étanchéité ou de finition

(30) Priority: 09.06.1995 GB 9511716
(43) Date of publication of application: 11.12.1996
(73) Proprietor: DRAFTEX INDUSTRIES LIMITED, Edinburgh EH2 3AP, Scotland (GB)
(72) Inventor: Sans, Philippe, 28110 Luce (FR)
(74) Representative: Foster, David Martyn

(56) References cited:
- EP-A- 0 285 925
- EP-A- 0 441 073
- US-A- 3 195 948

## Description

The invention relates to a longitudinally extending retaining, sealing or finishing strip, comprising a gripping portion for grippingly engaging at least part of the periphery of an opening in a frame, the gripping portion being provided with means for mounting an edge of a sheet of material, and the mounting means being located on one outside edge of the gripping portion.

The invention further relates to a sealing and retaining strip for the frame of a window opening in a door of a motor vehicle, comprising a longitudinally extending channel-shaped gripping portion, one face of the external channel wall of the strip being provided with a flexible seal for sealing against a window glass in the frame and an opposite face of the strip being provided with mounting means for mounting a trim panel on the door.

Such strips are known from EP-A-0 441 073. The strip is provided with an integrally formed section extending along the length of the strip for mounting a vehicle interior trim panel with reference to the opening. However, in certain applications such a strip is cumbersome and unnecessarily heavy.

Accordingly, the known strip as first set forth above is characterised, in accordance with the invention, in that the mounting means comprises two or more longitudinally spaced clips for positioning and mounting the edge of the sheet of material to be secured around or next to the opening.

Accordingly, the known strip as secondly set forth above is characterised, in accordance with the invention, in that the mounting means comprises a series of longitudinally spaced-apart clips for engagingly mounting a trim panel on the door.

Retaining, sealing or finishing strips according to the invention will now be described, by way of example only, with reference to the accompanying diagrammatic drawings in which:
Figure 1 is a perspective view of one of the retaining, sealing and finishing strips;
Figure 2 is a transverse cross-sectional view taken on the line II-II of Figure 1;
Figure 3 is a view corresponding to Figure 2 but showing the strip mounted on a vehicle body panel with the window glass and the interior trim in position;
Figure 4 is a transverse cross-sectional view of a second embodiment of the invention with an alternative configuration for the sealing section; and
Figure 5 is a view corresponding to Figure 4 but showing the strip mounted on a vehicle body panel with the door closed and trim in position;

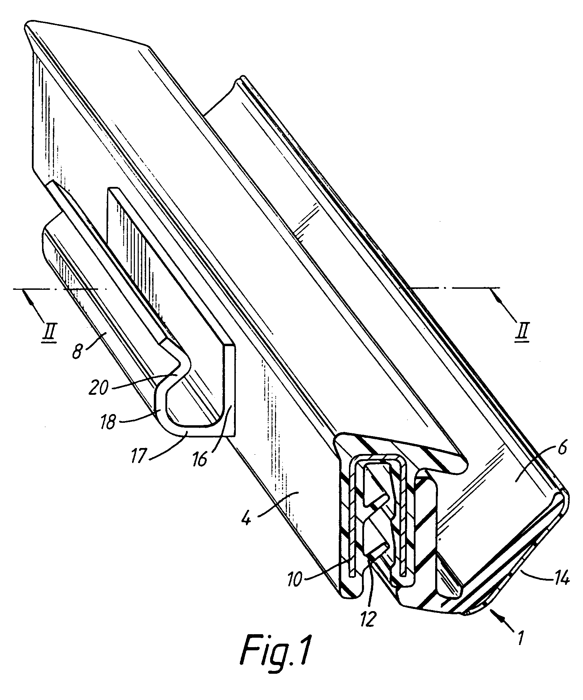

In a first embodiment of the invention shown in Figure 1, the longitudinally extending retaining, sealing and finishing strip comprises a gripping portion 4, a sealing portion 6 and trim retaining clips 8 (only one shown in the Figure).

In this example, the gripping portion 4 is made of channel-shaped resilient material such as plastics or rubber material in which is embedded a longitudinally extending U-shaped reinforcing metal carrier 10. The gripping portion 4 is also provided with deformable gripping lips 12 which run along one inside wall of the channel 9. Serrations 13 are provided on the opposite inside wall. It will be appreciated that other designs of gripping portion are possible, for example the metal carrier may take any suitable form, such as U-shaped metal elements arranged side-by-side to define a channel and either interconnected or completely disconnected. The number of gripping lips 12 may also be varied. In this example, there are two relatively large gripping lips on one inside wall of the channel and two relatively smaller serrations 13 on the other inside wall, but there need not be equal numbers of lips 12 or serrations 13 on the two sides, and there may be more, less or no gripping lips 12 or serrations 13 on either channel inside wall.

The sealing portion 6 in this example comprises a longitudinally extending deformable sealing lip 14. The sealing portion 6 may form a seal against a fixed window or other panel and may also be of a different design to that described.

The sealing portion 6 is preferably made of a soft resilient material such as of foamed or expanded consistency, such as rubber or plastics material. The sealing portion 6 may be produced separately and then attached to the gripping portion 4 adhesively. Alternatively it may be extruded simultaneously with the gripping portion 4. It will be appreciated that the two portions 4,6 need not necessarily be made from the same material and indeed, need not be of the same hardness or consistency.

The trim retaining clip 8 is generally channel-shaped comprising a first side limb 16, a base 17 and a second side limb 18. The latter limb 18 is extended upwardly and is provided with an inwardly extending angular portion 20. The limb 16 is fixedly attached to the outer wall of the gripping portion 4, for example by adhesive.

The trim retaining clip 8 is preferably made of a resilient material such as a plastics or rubber material capable of limited elastic deformation.

Although only one clip 8 is shown in Figure 1, in practice each sealing and retaining strip 1 is provided with a plurality of such clips 8 positioned at spaced-apart intervals along the length of the strip.

Each trim retaining clip 8 can be manufactured separately to the remainder of the sealing and retaining strip 1 and adhesively fixed to the gripping portion 4 and can be made from the same materials or materials different from those of the gripping portion 4 and the sealing portion 6.

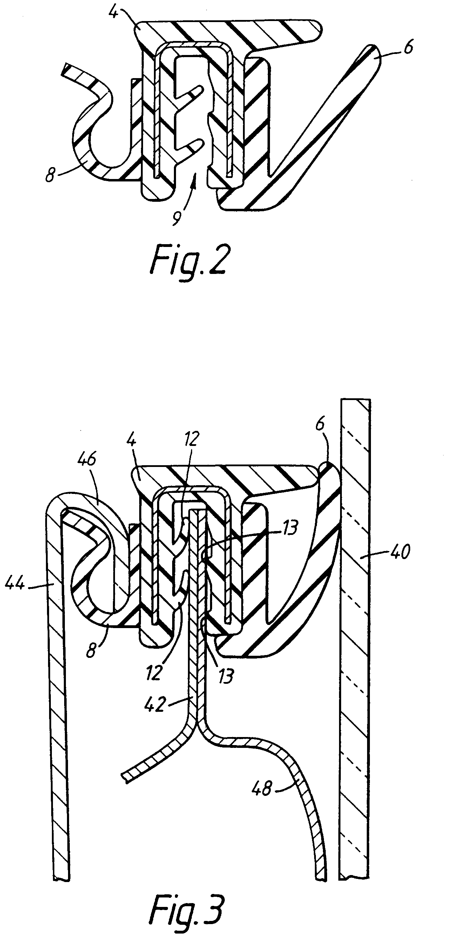

As illustrated in Figure 3, the strip 1 is in use positioned along the waistline of the vehicle, that is running horizontally along the inside of the gap into which the window glass pane 40 descends into the hollow lower part of the door. The strip 1 is mounted on a metal flange 42 running along the bottom of a window opening in the vehicle body, the flange being produced where panels 43 and 48 of the door are welded together. As shown, the strip 1 is fitted in position by placing the gripping portion 4 on the metal flange 42 so that the gripping lips 12 deform and seal against and grip the walls of the flange 42, this process being aided by the serrations 13.

The sealing lip 14 deforms and bears against the window pane 40, providing a seal against air, water, dust and noise.

The vehicle trim 44, made of semi-stiff material, has a curved-over upper edge 46 the thickness of which is slightly larger than the gap provided between the limb 16 and the angular portion 20 of the trim retaining clip 8. The edge 46 is thus forced into this gap, and the corresponding gap of each other similar clip (not shown) positioned along the length of the gripping portion 4, each clip 8 elastically deforming to allow the edge 46 to be lockingly fixed to the sealing, retaining and finishing strip 1 and hence held in position on the door.

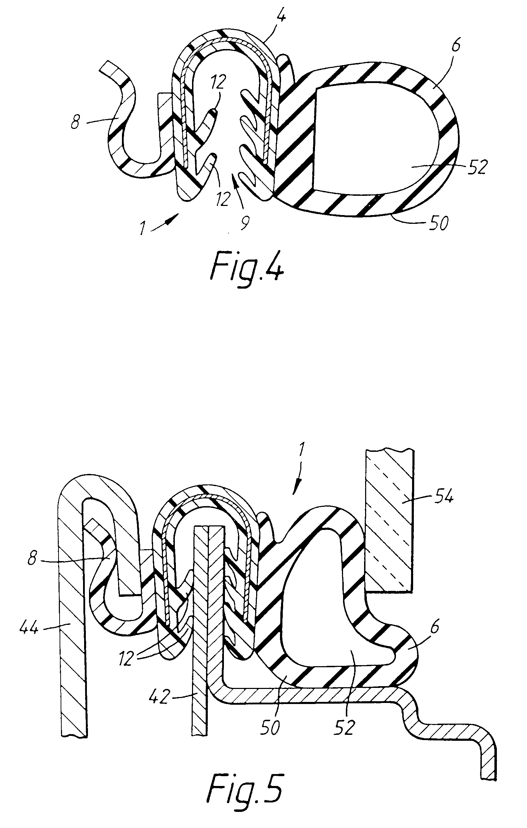

A second embodiment of the invention is shown in Figure 4 in which parts corresponding to parts in other Figures are similarly referenced.

The strip of Figure 4 is generally similar to that of Figure 1 but the sealing portion 6 has been modified for use as a door seal. In this embodiment the gripping portion 4 is provided with four gripping lips 12 on one side wall of the channel and two relatively larger gripping lips 12 on the opposite inside wall of the channel 9. Again, the number of lips on each wall may be varied or there may be more, less or no gripping lips on either channel inside wall.

The sealing section 50 is preferably made of soft resilient material such as rubber or plastics. It may be produced separately and then attached to the gripping portion 4 as by means of adhesive. Alternatively it may be extruded simultaneously with the material forming the gripping portion 4. In this example, the sealing section 50 is formed with a hollow tubular bone 52 which extends along the complete length of the strip.

As illustrated in Figure 5, the strip 1 is in use positioned around the door opening of the vehicle. The strip is mounted on a metal flange 42 which runs around the periphery of the door opening and which lies within the plane of the opening and extends towards the centre of the opening. The strip 1 is again placed over the flange 42 and the gripping lips 12 grippingly engage the flange 42.

The trim retaining clips 8 are attached to the opposite side of the gripping portion 4 from the sealing portion 6.

The vehicle trim 44 can again be lockingly fixed to the retaining, sealing and finishing strip 1 in the same manner as explained above in connection with Figures 1 to 3, and hence held in position on the vehicle body surrounding the door opening.

The strip of Figure 4 and 5 can be modified by removing the sealing portion 6. The strip then acts as a finisher for the flange 42 but also supports the clips 8 which in turn support the trim 44 in the manner explained.

It will be appreciated that there are many other configuration of sealing and finishing strip to which the retaining clips 8 can be attached, in order to hold interior trim panels 44 in place.

## Claims

1. A longitudinally extending retaining, sealing or finishing strip, comprising a gripping portion (4) for grippingly engaging at least part of the periphery of an opening in a frame, the gripping portion (4) being provided with means for mounting an edge of a sheet of material, and the mounting means being located on one outside edge of the gripping portion (4), characterised in that the mounting means comprises two or more longitudinally separated clips (8) for positioning and mounting the edge of the sheet of material to be secured around or next to the opening.

2. A strip according to claim 1, characterised in that the strip is provided with sealing means (6) mounted on another outside face of the gripping portion (4) for forming a seal between the frame and a closure member.

3. A strip according to claim 2, characterised in that the closure member is a window (40).

4. A strip according to claim 2, characterised in that the closure member is a door.

5. A strip according to any preceding claim, characterised in that the gripping portion (4) is channel-shaped.

6. A strip according to any preceding claim, characterised in that the sealing means (6) is a longitudinally extending deformable lip.

7. A strip according to any one of claims 1 to 5, characterised in that the sealing means (6) is tubular.

8. A strip according to any preceding claim, characterised in that the strip is provided with a plurality of the clips (8) longitudinally spaced at intervals along the strip.

9. A strip according to any preceding claim, characterised in that each clip (8) is generally channel-shaped.

10. A strip according to claim 9, characterised in that the mouth of the channel of each clip (8) is provided with an angular portion (20) extending towards the gripping portion.

11. A strip according to any preceding claim, characterised in that the sheet of material to be mounted is part of a vehicle trim (44).

12. A strip according to claim 11, characterised in that the vehicle trim (44) is provided with a curved-over outer edge (46).

13. A sealing and retaining strip for a frame of a window opening in a door of a motor vehicle, comprising a longitudinally extending channel-shaped gripping portion (4), one face of the external channel wall of the strip being provided with a flexible seal (6) for sealing against a window glass in the frame and an opposite face of the strip being provided with mounting means for mounting a trim panel (44) on the door, characterised in that the mounting means comprises a series of longitudinally spaced-apart clips (8) for engagingly mounting a trim panel (44) on the door.

14. A strip according to any preceding claim, characterised in that the gripping portion (4) incorporates a metal carrier.

15. A strip according to claim 5 or 13, characterised in that the gripping portion incorporates a channel-shaped metal carrier (10).

## Patentansprüche

1. Sich längs erstreckende Befestigungs-, Dichtungs- oder Zierleiste mit einem Klemmbereich (4) zum klemmenden Erfassen wenigstens eines Teils des Umfangs einer Öffnung in einem Rahmen, wobei der Klemmbereich (4) mit einem Mittel zum Befestigen einer Kante einer Materialplatte versehen ist und das Befestigungsmittel an einer Außenkante des Klemmbereichs (4) angeordnet ist,
**dadurch gekennzeichnet,**
daß das Befestigungsmittel zwei oder mehr der Länge nach geteilte Klemmen (8) zum Positionieren und Befestigen der Kante der um die Öffnung oder nahe der Öffnung zu befestigenden Materialplatte aufweist.

2. Leiste nach Anspruch 1, dadurch gekennzeichnet, daß die Leiste mit einem auf einer anderen Außenseite des Klemmbereichs (4) angebrachten Dichtungsmittel (6) versehen ist, um eine Abdichtung zwischen dem Rahmen und einem Schließteil zu bilden.

3. Leiste nach Anspruch 2, dadurch gekennzeichnet, daß das Schließteil ein Fenster (40) ist.

4. Leiste nach Anspruch 2, dadurch gekennzeichnet, daß das Schließteil eine Tür ist.

5. Leiste nach einem der vorhergehenden Ansprüche, dadurch gekennzeichnet, daß der Klemmbereich (4) kanalförmig ist.

6. Leiste nach einem der vorhergehenden Ansprüche, dadurch gekennzeichnet daß das Dichtungsmittel (6) eine sich längs erstreckende verformbare Lippe ist.

7. Leiste nach einem der Ansprüche 1 bis 5, dadurch gekennzeichnet, daß das Dichtungsmittel (6) rohrförmig ist.

8. Leiste nach einem der vorhergehenden Ansprüche, dadurch gekennzeichnet, daß die Leiste entlang der Leiste mit der Länge nach in Abständen voneinander beabstandeten Klemmen (8) versehen ist.

9. Leiste nach einem der vorhergehenden Ansprüche, dadurch gekennzeichnet, daß jede Klemme (8) im wesentlichen kanalförmig ist.

10. Leiste nach Anspruch 9, dadurch gekennzeichnet, daß die Öffnung des Kanals jeder Klemme (8) mit einem winkligen Bereich (20) versehen ist, der sich zum Klemmbereich hin erstreckt.

11. Leiste nach einem der vorhergehenden Ansprüche, dadurch gekennzeichnet, daß die zu befestigende Materialplatte ein Teil einer Fahrzeugverzierung (44) ist.

12. Leiste nach Anspruch 11, dadurch gekennzeichnet daß die Fahrzeugverzierung (44) mit einer umgebogenen Außenkante versehen ist.

13. Dichtungs- und Befestigungsleiste für den Rahmen einer Fensteröffnung in einer Tür eines Kraftfahrzeuges mit einem sich längs erstreckenden, kanalförmigen Klemmbereich (4), wobei eine Seite der äußeren Kanalwand der Leiste mit einer flexiblen Dichtung (6) versehen ist, um gegen eine Fensterscheibe in dem Rahmen abzudichten, und die gegenüberliegende Seite der Leiste mit einem Befestigungsmittel versehen ist, um ein Verzierungsblech (44) an der Tür zu befestigen, dadurch gekennzeichnet, daß das Befestigungsmittel eine Reihe der Länge nach voneinander beabstandeter Klemmen (8) aufweist, um ein Verzierungsblech (44) an der Tür ineinandergreifend zu befestigen.

14. Leiste nach einem der vorhergehenden Ansprüche, dadurch gekennzeichnet, daß in dem Klemmbereich (4) ein Metallträger eingelagert ist.

15. Leiste nach Anspruch 5 oder 13, dadurch gekennzeichnet, daß in dem Klemmbereich (4) ein kanalförmiger Metallträger (10) eingelagert ist.

## Revendications

1. Bande de retenue, d'étanchéité ou de finition s'étendant longitudinalement, comportant une partie d'accrochage (4) destinée à engager avec accrochage au moins une partie de la périphérie d'une ouverture dans un cadre, la partie d'accrochage (4) étant pourvue de moyens pour le montage d'un bord d'une feuille de matière, et les moyens de montage étant disposés sur un bord extérieur de la partie d'accrochage (4), caractérisée en ce que les moyens de montage comportent deux ou plusieurs agrafes longitudinalement séparées (8) afin de positionner et monter le bord de la feuille de matière devant être fixée autour ou près de l'ouverture.

2. Bande selon la revendication 1, caracterisée en ce que la bande est pourvue de moyens d'étanchéité (6) montés sur une autre faces extérieure de la partie d'accrochage (4) afin de former un joint entre le cadre et un élément de fermeture.

3. Bande selon la revendication 2, caractérisée en ce que l'élément de fermeture est une fenêtre (40).

4. Bande selon la revendication 2, caractérisée en ce que l'élément de fermeture est une porte.

5. Bande selon l'une quelconque des revendications précédentes, caractérisée en ce que la partie d'accrochage (4) est en forme de canal.

6. Bande selon l'une quelconque des revendications précédentes, caractérisée en ce que les moyens d'étanchéité (6) sont constitués par une lèvre déformable s'étendant longitudinalement.

7. Bande selon l'une quelconque des revendications 1 à 5, caractérisée en ce que les moyens d' étanchéité (6) sont tubulaires.

8. Bande selon l'une quelconque des revendications précédentes, caractérisée en ce que la bande est pourvue de plusieurs agrafes (8) longitudinalement espacées à intervalles le long de la bande.

9. Bande selon l'une quelconque des revendications précédentes, caractérisée en ce que chaque agrafe (8) est globalement en forme de canal.

10. Bande selon la revendication 9, caractérisée en ce que l'embouchure du canal de chaque agrafe (8) est pourvue d'une partie angulaire (20) s'étendant vers la partie d'accrochage.

11. Bande selon l'une quelconque des revendications précédentes, caractérisée en ce que la feuille de matière devant être montée est une partie d'une garniture de véhicule (44).

12. Bande selon la revendication 11, caractérisée en ce que la garniture de véhicule (44) est pourvue d'un bord extérieur recourbé (46).

13. Garniture d'étanchéité et de retenue pour un cadre d'une ouverture de fenêtre dans une porte d'un véhicule à moteur, comportant une partie d'accrochage en forme de canal s'étendant longitudinalement (4), une face de la paroi de canal externe de la bande étant pourvue d'un joint flexible (6) destiné à assurer l'étanchéité contre une vitre dans le cadre et une face opposée de la bande étant pourvue de moyens de montage afin de monter un panneau de garniture (44) sur la porte, caractérisée en ce que les moyens de montage comportent une série d'agrafes longitudinalement espacées (8) afin de monter avec engagement un panneau de garniture (44) sur la porte.

14. Bande selon l'une quelconque des revendications précédentes, caractérisée en ce que la partie d'accrochage (4) incorpore un support métallique.

15. Bande selon la revendication 5 ou 13, caractérisée en ce que la partie d'accrochage incorpore un support métallique en forme de canal (10).
